# EUROPÄISCHE PATENTSCHRIFT

(11) **EP 1 636 608 B1**
(45) Veröffentlichungstag und Bekanntmachung des Hinweises auf die Patenterteilung: **20.09.2006**
(21) Anmeldenummer: 04738711.3
(22) Anmeldetag: 17.06.2004
(51) Int. Cl.: G01S 13/90

(54) **VERFAHREN ZUR SIGNALAUSWERTUNG IN EINEM SAR/MTI-PULSRADARSYSTEM**
SIGNAL EVALUATION METHOD FOR USE IN A SAR/MTI PULSE RADAR SYSTEM
PROCEDE D'EVALUATION DE SIGNAUX DANS UN SYSTEME RADAR A IMPULSIONS SAR/MTI

(30) Priorität: 23.06.2003 DE 10328279
(43) Veröffentlichungstag der Anmeldung: 22.03.2006
(73) Patentinhaber: EADS Deutschland GmbH, 85521 Ottobrunn (DE)
(72) Erfinder: LÖHNER, Andreas, 89231 Neu-Ulm (DE); DRESCHER, Roland, 89269 Vöhringen (DE)
(74) Vertreter: Meel, Thomas
(86) Internationale Anmeldenummer: PCT/DE2004/001260
(87) Internationale Veröffentlichungsnummer: WO 2005/001507

(56) Entgegenhaltungen:
- EP-A- 0 251 498
- P. HOOGEBOOM ET AL: "SOSTAR, A EUROPEAN SYSTEM FOR AIRBORNE GROUND SURVEILLANCE"[Online] 28. Januar 2002 (2002-01-28), Seiten 1-4, XP002303903 Gefunden im Internet: URL:http://www.tno.nl/instit/fel/os/resour ces/SOSTAR_fullpaper.PDF> [gefunden am 2004-11-03]
- SALZMAN J ET AL: "Interrupted synthetic aperture radar (SAR)" PROCEEDINGS OF THE 2001 IEEE RADAR CONFERENCE. ATLANTA, GA, MAY 1 - 3, 2001, IEEE RADAR CONFERENCE, NEW YORK, NY : IEEE, US, 1. Mai 2001 (2001-05-01), Seiten 117-122, XP010542440 ISBN: 0-7803-6707-3 in der Anmeldung erwähnt
- PATENT ABSTRACTS OF JAPAN Bd. 1998, Nr. 08, 30. Juni 1998 (1998-06-30) & JP 10 078481 A (MITSUBISHI ELECTRIC CORP), 24. März 1998 (1998-03-24)

## Beschreibung

Die Erfindung betrifft ein Verfahren zur Auswertung der Empfangssignale in einem SAR/MTI-Pulsradarsystem gemäß dem Oberbegriff des Patentanspruchs 1.

Ein solches SAR/MTI-Pulsradarsystem ist z.B. aus P. Hoogeboom et al.: "SOSTAR, A EUROPEAN SYSTEM FOR AIRBORNE GROUND SURVEILLANCE", TNO Physics and Electronics Laboratory, 28-01-2002, bekannt.

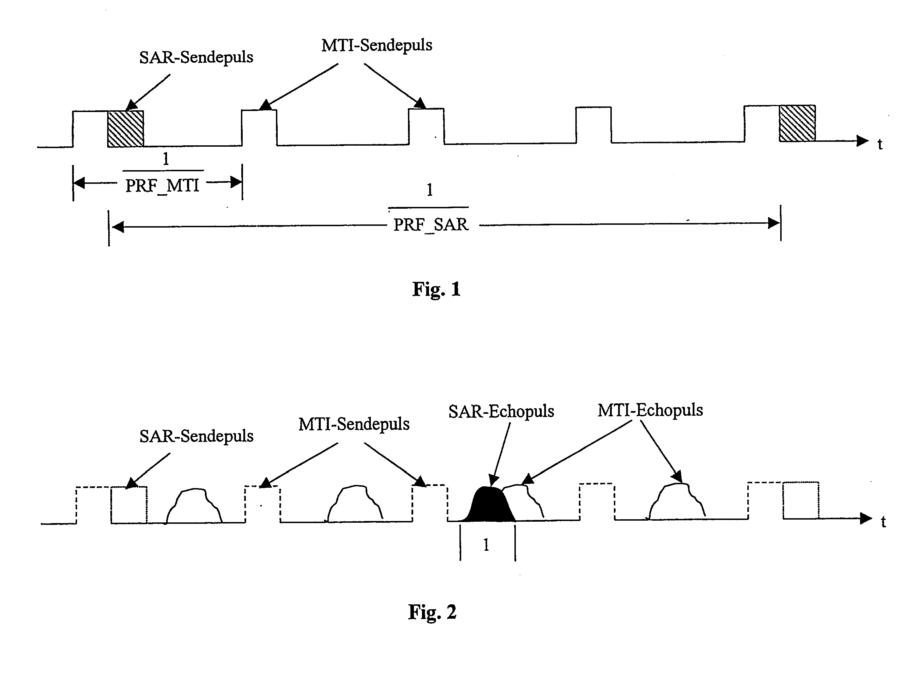

Mit Synthetic Apertur Radar/Moving Target Indication (SAR/MTI)-Pulsradarsystemen können einerseits SAR-Bilder aufgenommen werden und andererseits bewegte Ziele in den aufgenommenen SAR-Bildern identifiziert werden. Fig. 1 zeigt die Pulsfolge eines Sendesignals eines SAR/MTI-Pulsradarsystems. Aufgrund der unterschiedlichen Beleuchtungszeiten, welche erforderlich sind um bei dem jeweiligen Auswerteverfahren eine hohe Auflösung zu erzielen, weichen die Pulswiederholfrequenzen der SAR- und MTI-Sendepulse stark voneinander ab. Für eine SAR-Auswertung mit einer Auflösung von bis zu 1m ist eine Beleuchtungszeit T_SAR von bis zu 30-60s erforderlich. Die Beleuchtungszeit T_MTI eines Bodengebietes zur Identifizierung und Verfolgung (Tracking) von Bewegtzielen beträgt hingegen üblicherweise 100-200ms.

In Fig. 2 ist die empfangene Echopulsfolge dargestellt, welche im Wesentlichen eine Überlagerung von SAR- und MTI-Echopulsen ist. Bei bekannten SAR/MTI-Radarsystemen erfolgt die Signalauswertung derart, dass die Aufnahme und Erzeugung von SAR-Bilder und die Analyse der SAR-Bildern mittels MTI-Verfahren zur Identifikation von Bewegtzielen zeitlich nacheinander stattfinden. Üblicherweise wird zuerst ein SAR-Bild aufgenommen, welches anschließend in einem MTI-Prozess auf Bewegtziele untersucht wird.

Eine gleichzeitige Auswertung der Signale in einem SAR- und einem MTI-Prozess ist somit nur mit großem technischen Aufwand möglich. Für bekannte Verfahren zur Signalauswertung in SAR/MTI-Radarsystemen wird das Empfangssignal in zwei nahezu identische Komponenten aufgeteilt, wobei ein Teil des Signals einer Einrichtung zur SAR-Signalauswertung und ein anderer Teil des Signals einer Einrichtung zur MTI-Signalauswertung zugeführt wird. Ein Nachteil hierbei ist, dass das Radarsystem, insbesondere die Radarantenne eine Vielzahl von Bauelementen umfasst und somit technisch sehr aufwendig zu realisieren ist. Hieraus ergeben sich weitere Nachteile hinsichtlich des hohen Gewichts der Antenne. Ein weiterer Nachteil ist die große Abmessung der Antenne, wodurch die Antenne nur schlecht in ein Fluggerät integriert werden kann.

Es ist somit Aufgabe der Erfindung ein Verfahren anzugeben, mit dem es möglich ist, die Empfangssignale bezüglich SAR unnd MTI gleichzeitig zu verarbeiten, ohne dass ein großer technischer Aufwand erforderlich ist. Eine weitere Aufgabe besteht in der Schaffung einer Antenne zur Durchführung des Verfahrens.

Diese Aufgaben werden mit dem Verfahren nach Patentanspruch 1 und der Antenne nach Anspruch 5 gelöst. Vorteilhafte Ausführungen der Erfindung sind Gegenstand von Unteransprüchen.

Erfindungsgemäß wird in der empfangenen Echopulsfolge des Empfangssignals jeder, einem ganzzahligen Vielfachen eines ganzzahligen Verhältnisses der Pulswiederholfrequenz PRF_MTI des MTI-Sendesignals zu der Pulswiederholfrequenz PRF_SAR des SAR-Sendesignals entsprechende, nach einem SAR-Sendepuls empfangene Puls in einem SAR-Verfahren ausgewertet und erfindungsgemäß werden die übrigen Pulse der empfangenen Echopulsfolge des Empfangssignals in einem MTI-Verfahren ausgewertet, wobei der durch die SAR-Signalverarbeitung fehlende Puls für die MTI-Signalverarbeitung mittels Interpolationsverfahren reproduziert wird.

Die Erfindung sowie Vorteile der Erfindung werden im folgenden anhand von Zeichnung näher erläutert. Es zeigen:
- Fig. 1: eine beispielhafte Darstellung einer Sendepulsfolge eines SAR/MTI-Radarsystems mit SAR- und MTI-Sendepulsen,
- Fig. 2: eine beispielhafte Darstellung einer Echopulsfolge eines SAR/MTI-Radarsystems mit SAR- und MTI-Sendepulsen,
- Fig. 3: eine erste beispielhafte Ausführung einer schematische Blockdarstellung einer erfindungsgemäßen Antennenanordnung,
- Fig. 4: eine zweite beispielhafte Ausführung einer schematische Blockdarstellung einer erfindungsgemäßen Antennenanordnung.

Fig. 1 zeigt, wie bereits oben beschrieben, eine beispielhafte Darstellung einer Sendepulsfolge eines SAR/MTI-Radarsystems mit SAR- und MTI-Sendepulsen. Aufgrund der niedrigeren Pulswiederholfrequenz des SAR-Sendepulses gegenüber eines MTI-Sendepulses erfolgt die Aussendung eines SAR-Pulses lediglich nach jedem fünften MTI-Puls, wobei 5 das Verhältnis der Pulswiederholfrequenz PRF_MTI des MTI-Sendesignals zu der Pulswiederholfrequenz PRF_SAR des SAR-Sendesignals angibt. In dem Zeitfenster zwischen den Sendepulsen ist das Radarsystem auf Empfang geschaltet.

Eine beispielhafte Echopulsfolge eines Sendesignals ist in Fig. 2 dargestellt. Die Darstellung zeigt eine Überlagerung von SAR- und MTI-Echopulsen. Der in Fig. 2 im mit der Bezugsziffer 1 bezeichneten Zeitintervall empfangene Puls wird mittels eines bekannten SAR-Verfahren ausgewertet. Der dabei verlorengegange MTI-Puls wird erfindungsgemäß mittels eines Interpolationsverfahrens reproduziert. Ein solches Interpolationsverfahren ist z.B. aus Joseph Salzmann et al.;"Interrupted Synthetic Aperture Radar (SAR)"; IEEE AESS Systems Magazine, May 2002, Seiten 33-39 bekannt.

Vorteilhaft kann das Verhältnis der Pulswiederholfrequenz PRF_MTI des MTI-Sendesignals zu der Pulswiederholfrequenz PRF_SAR des SAR-Sendesignals von MTI-Burst zu MTI-Burst verändert werden. Somit können die bei der MTI-Signalauswertung auftretenden Entfernungsmehrdeutigkeiten bestimmt werden.

Die Pulswiederholfrequenz PRF_SAR des Sendesignals beträgt vorteilhaft zwischen 200 Hz und 400 Hz. Und die Pulswiederholfrequenz PRF_MTI beträgt vorteilhaft zwischen 2 kHz und 4 kHz. Somit sind ganzzahlige Verhältnisse der Pulswiederholfrequenz PRF_MTI des MTI-Sendesignals zu der Pulswiederholfrequenz PRF_SAR des SAR-Sendesignals von 5, 6, 7, 8, 9, 10, 11, 12, 13, 14, 15, 16, 17, 18, 19, 20 möglich. Selbstverständlich ist es möglich, durch geeignete Anpassung der Pulswiederholfrequenzen PRF_SAR und PRF_MTI größere Verhältnisse einzustellen.

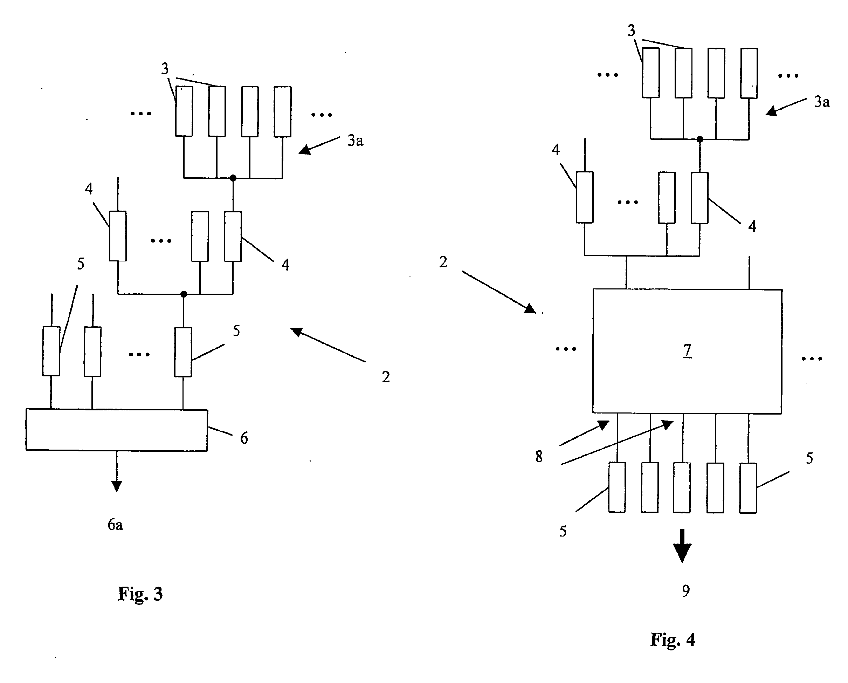

In Fig. 3 ist in einer ersten besonderen Ausführungsform eine beispielhafte schematische Blockdarstellung einer erfindungsgemäßen Antennenanordnung gezeigt.

Die Antennenanordnung 2 umfasst eine Vielzahl von Sende- und Empfangsmodulen 3 (T/R-Module). Diese T/R-Module 3 sind zu einer vorgebbaren Anzahl von Untergruppen 3a zusammengefasst.

Die T/R-Module 3 sind jeder Untergruppe 3a einer gemeinsamen Verzögerungsstrecke 4 zugeführt. Eine vorgebbare Anzahl von Verzögerungsstrecken 4 ist vorteilhaft zusammengefasst und einer gemeinsamen digitalen Empfangseinheit 5 zugeführt.

Die digitalen Empfangseinheiten 5 sind vorteilhaft mit Mitteln 6 zur digitalen Strahlformung und zur Festzielunterdrückung nach dem STAP-Verfahren (Space-time adaptive processing) verbunden. Die Mittel 6 zur digitalen Strahlformung und zur Festzielunterdrückung sind vorteilhaft weiteren Mittel 6a zur SAR- und MTI-Signalauswertung zugeführt.

In Fig. 4 ist eine zweite besondere Ausführungsform einer Antenne beispielhaft schematisch dargestellt. Die Antennenanordnung 2 umfasst eine Vielzahl von T/R-Module 3, welche zu einer vorgebbaren Anzahl von Untergruppen 3a zusammengefasst sind. Bei dieser Ausführungsform ist eine vorgebbare Anzahl von Verzögerungsstrecken 4 zu einem analogen Netzwerk 7 mit einer vorgebbaren Anzahl von Ausgängen 8 zusammengefasst, welche jeweils einer digitalen Empfangseinheit 5, insbesondere einem Analog-/Digital-Wandler zugeführt sind, wobei die digitalen Empfangseinheiten 5 jeweils mit Mitteln 9 zur SAR- und MTI-Signalauswertung zugeführt. Das analoge Netzwerk 7 generiert dabei gleichzeitig verschiedene schmalbandige Strahlungscharakteristiken mit verschiedenen Richtungen.

## Patentansprüche

1. Verfahren zur Auswertung eines Empfangssignals eines mit einer jeweils vorgebbaren Pulswiederholfrequenz (PRF_SAR, PRF_MTI) SAR- und MTI-Sendepulse aussendendes SAR/MTI-Putsradarsystems, wobei das Empfangssignal eine Überlagerung aus Echopulsfolgen von SAR-Echopulssignalen und MTI-Echopulssignalen ist, **dadurch gekennzeichnet, dass** in der empfangenen Echopulsfolge des Empfangssignals jeder, einem ganzzahligen Vielfachen eines ganzzahligen Verhältnisses der Pulswiederholfrequenz PRF_MTI des MTI-Sendesignals zu der Pulswiederholfrequenz PRF_SAR des SAR-Sendesignals entsprechende, nach einem SAR-Sendepuls empfangene Puls in einem SAR-Verfahren ausgewertet wird und die übrigen Pulse der empfangenen Echopulsfolge des Empfangssignals in einem MTI-Verfahren ausgewertet werden, wobei der durch die SAR-Signalverarbeitung fehlende Puls für die MTI-Signalverarbeitung mittels Interpolationsverfahren reproduziert wird.

2. Verfahren nach Anspruch 1, **dadurch gekennzeichnet, dass** das Verhältnis der Pulswiederholfrequenz PRF_MTI des MTI-Sendesignals zu der Pulswiederholfrequenz PRF_SAR des SAR-Sendesignals mindestens 5 beträgt.

3. Verfahren nach Anspruch 1, **dadurch gekennzeichnet, dass** das Verhältnis der Pulswiederholfrequenz PRF_MTI des MTI-Sendesignals zu der Pulswiederholfrequenz PRF_SAR des SAR-Sendesignals von MTI-Burst zu MTI-Burst verändert wird.

4. Verfahren nach einem der vorangehenden Ansprüche, **dadurch gekennzeichnet, dass** die Pulswiederholfrequenz PRF_SAR des SAR-Sendesignals zwischen 200 Hz und 400 Hz beträgt.

5. Verfahren nach einem der vorangehenden Ansprüche, **dadurch gekennzeichnet, dass** die Pulswiederholfrequenz PRF_MTI des MTI-Sendesignals zwischen 2 kHz und 4 kHz beträgt.

6. Antenne mit einer Vielzahl von Sende- und Empfangsmodulen (3) zur Durchführung eines Verfahrens nach einem der vorangehenden Ansprüche, **dadurch gekennzeichnet, dass** die Sende- und Empfangsmodule (3) in eine vorgebbare Anzahl von Untergruppen (3a) zusammengefasst sind, wobei eine vorgebbare Anzahl von Sende- und Empfangsmodulen (3) einer gemeinsamen Verzögerungsstrecke (4) zugeführt ist.

7. Antenne nach Anspruch 6, **dadurch gekennzeichnet, dass** eine vorgebbare Anzahl von Verzögerungsstrecken (4) zusammengefasst sind und einer digitalen Empfangseinheit (5), insbesondere einem Analog-/Digital-Wandler zugeführt sind.

8. Antenne nach Anspruch 7, **dadurch gekennzeichnet, dass** die digitalen Empfangseinheiten (5) mit Mitteln (6) zur digitalen Strahlformung und Festzielunterdrückung nach dem STAP-Verfahren verbunden sind.

9. Antenne nach Anspruch 8, **dadurch gekennzeichnet, dass** die Mittel (6) zur digitalen Strahlformung und Festzielunterdrückung mit weiteren Mittel (6a) zur SAR- und MTI-Signalauswertung verbunden sind.

10. Antenne nach Anspruch 6, **dadurch gekennzeichnet, dass** eine vorgebbare Anzahl von Verzögerungsstrecken (4) zu einem analogen Netzwerk (7) mit einer vorgebbaren Anzahl von Ausgängen (8) zusammengefasst ist, welche jeweils einer digitalen Empfangseinheit (5), insbesondere einem Analog-/Digital-Wandler zugeführt sind, wobei die digitalen Empfangseinheiten (5) jeweils mit Mitteln (9) zur SAR- und MTI-Signalauswertung verbunden sind.

## Claims

1. Method for evaluating a receive signal of a SAR/MTI pulse radar system emitting SAR and MTI transmit pulses having a predeterminable pulse repetition frequency (PRF_SAR, PRF_MTI) in each case, in which the receive signal is a superimposition of echo pulse trains of SAR echo pulse signals and MTI echo pulse signals, **characterized in that** every pulse in the received echo pulse train of the receive signal which corresponds to an integer multiple of an integer ratio of the pulse repetition frequency PRF_MTI of the MTI transmit signal to the pulse repetition frequency PRF_SAR of the SAR transmit signal, and which is received after a SAR transmit pulse, is evaluated in a SAR process, and the remaining pulses of the received echo pulse train of the receive signal are evaluated in an MTI process, wherein the pulse for the MTI signal processing which is missing as a result of the SAR signal processing is reproduced by means of interpolation methods.

2. Method according to Claim 1, **characterized in that** the ratio of the pulse repetition frequency PRF_MTI of the MTI transmit signal to the pulse repetition frequency PRF_SAR of the SAR transmit signal is at least 5.

3. Method according to Claim 1, **characterized in that** the ratio of the pulse repetition frequency PRF_MTI of the MTI transmit signal to the pulse repetition frequency PRF_SAR of the SAR transmit signal is altered from MTI burst to MTI burst.

4. Method according to one of the preceding claims, **characterized in that** the pulse repetition frequency PRF_SAR of the SAR transmit signal is between 200 Hz and 400 Hz.

5. Method according to one of the preceding claims, **characterized in that** the pulse repetition frequency PRF_MTI of the MTI transmit signal is between 2 kHz and 4 kHz.

6. Antenna having a plurality of transmit and receive modules (3) for carrying out a method according to one of the preceding claims, **characterized in that** the transmit and receive modules (3) are grouped into a predeterminable number of subgroups (3a), wherein a predeterminable number of transmit and receive modules (3) are fed to a shared delay element (4).

7. Antenna according to Claim 6, **characterized in that** a predeterminable number of delay elements (4) are grouped and are fed to a digital receiving unit (5), in particular to an analog/digital converter.

8. Antenna according to Claim 7, **characterized in that** the digital receiving units (5) are connected to means (6) for digital beam formation and fixed target suppression in accordance with the STAP method.

9. Antenna according to Claim 8, **characterized in that** the means (6) for digital beam formation and fixed target suppression are connected to further means (6a) for SAR and MTI signal evaluation.

10. Antenna according to Claim 6, **characterized in that** a predeterminable number of delay elements (4) are grouped to form an analog network (7) having a predeterminable number of outputs (8), which outputs are fed in each case to a digital receiving unit (5), in particular to an analog/digital converter, wherein the digital receiving units (5) are connected in each case to means (9) for SAR and MTI signal evaluation.

## Revendications

1. Procédé de traitement d'un signal de réception d'un système radar à impulsions SAR/MTI émettant des impulsions SAR et MTI avec une fréquence de répétition d'impulsion (PRF_SAR, PRF_MTI) définie, le signal de réception étant une superposition de suites d'impulsions d'échos de signaux d'impulsions d'échos SAR et de signaux d'impulsions d'échos MTI, **caractérisé en ce que** dans la suite d'impulsions d'échos reçue du signal de réception, chaque impulsion reçue après une impulsion d'émission SAR correspondant à un multiple entier d'un rapport entier de la fréquence de répétition des impulsions PRF_MTI du signal d'émission MTI sur la fréquence de répétition des impulsions PRF_SAR du signal d'émission SAR, est traité dans un procédé SAR, et les autres impulsions de la suite d'impulsions d'échos reçue du signal de réception sont traitées dans un procédé MTI, l'impulsion manquante en raison du traitement du signal SAR étant reproduite pour l'exploitation du signal MTI au moyen de procédés d'interpolation.

2. Procédé selon la revendication 1, **caractérisé en ce que** le rapport de la fréquence de répétition des impulsions PRF_MTI du signal d'émission MTI sur la fréquence de répétition des impulsions PRF_SAR du signal d'émission SAR est d'au moins 5.

3. Procédé selon la revendication 1, **caractérisé en ce que** le rapport de la fréquence de répétition des impulsions PRF_MTI du signal d'émission MTI sur la fréquence de répétition des impulsions PRF_SAR du signal d'émission SAR est modifié de burst MTI en burst MTI.

4. Procédé selon une des revendications précédentes, **caractérisé en ce que** la fréquence de répétition des impulsions PRF_SAR du signal d'émission SAR est situé entre 200 Hz et 400 Hz.

5. Procédé selon une des revendications précédentes, **caractérisé en ce que** la fréquence de répétition des impulsions PRF_MTI du signal d'émission MTI est situé entre 2 kHz et 4 kHz.

6. Antenne avec une pluralité de modules d'émission et de réception (3) pour exécuter un procédé selon une des revendications précédentes, **caractérisée en ce que** les modules d'émission et de réception (3) sont regroupés dans un nombre défini de sous-groupes (3a), un nombre défini de modules d'émission et de réception (3) alimentant une ligne à retard commune (4).

7. Antenne selon la revendication 6, **caractérisée en ce qu'**un nombre défini de lignes à délai (4) sont regroupées et sont acheminées vers une unité numérique de réception (5), notamment vers un convertisseur analogique-numérique.

8. Antenne selon la revendication 7, **caractérisée en ce que** les unités numériques de réception (5) sont reliées à des moyens (6) pour la formation numérique de faisceaux et pour la suppression de cibles fixes selon le procédé STAP.

9. Antenne selon la revendication 8, **caractérisée en ce que** les moyens (6) pour la formation numérique de faisceaux et pour la suppression de cibles fixes sont reliés à d'autres moyens (6a) de traitement de signaux SAR et MTI.

10. Antenne selon la revendication 6, **caractérisée en ce qu'**un nombre défini de lignes à retard (4) est regroupé en un réseau analogique (7) avec un nombre défini de sorties (8), chacune de ces dernières étant acheminée vers une unité numérique de réception (5), notamment vers un convertisseur analogique-numérique, chacune des unités numériques de réception (5) étant reliée à des moyens (9) de traitement de signaux SAR et MTI.
